# EUROPÄISCHE PATENTSCHRIFT

(11) **EP 3 172 871 B1**
(45) Veröffentlichungstag und Bekanntmachung des Hinweises auf die Patenterteilung: **09.05.2018**
(21) Anmeldenummer: 15744159.3
(22) Anmeldetag: 22.07.2015
(51) Int. Cl.: H04L 12/403, H04L 12/413, H04L 12/40

(54) **ZUGRIFFSVERFAHREN MIT ZUGRIFFSSCHLITZEN UND PRIORITÄTSAUFLÖSUNG**
ACCESS METHOD WITH ACCESS SLOTS AND PRIORITY RESOLUTION
PROCÉDÉ D'ACCÈS AVEC FENÊTRES D'ACCÈS ET RÉSOLUTION DE PRIORITÉ

(30) Priorität: 23.07.2014 DE 102014214458; 21.07.2015 DE 102015213680
(43) Veröffentlichungstag der Anmeldung: 31.05.2017
(73) Patentinhaber: Bayerische Motoren Werke Aktiengesellschaft, 80809 München (DE)
(72) Erfinder: KELLERMANN, Helmut, 85764 Oberschleissheim (DE); LIM, Hyung-Taek, 81927 München (DE); GEHRSITZ, Thomas, 81377 München (DE)
(86) Internationale Anmeldenummer: PCT/EP2015/066767
(87) Internationale Veröffentlichungsnummer: WO 2016/012502

(56) Entgegenhaltungen:
- EP-A2- 2 421 204
- WO-A1-93/02512
- WO-A1-2012/171586

## Beschreibung

Die Erfindung betrifft ein Verfahren zur Datenübertragung mittels Datenrahmen (Data frame) in einem Kommunikationsnetzwerk mit einer Mehrzahl von Stationen, insbesondere ein Zeitmultiplexverfahren (TDMA).

Die Anzahl elektronischer Systeme in Kraftfahrzeugen hat in den letzten Jahrzehnten stark zugenommen. Daher weisend die technischen Einrichtungen des Kraftfahrzeugs inzwischen eine Vielzahl elektronischer Systeme auf, welche das Kraftfahrzeug steuern und welche teilweise mechanische Systeme ersetzen.

Da bei einer herkömmlichen Verkabelung für jede Information je eine Leitung benötigt wird, steigt mit zunehmendem Funktionsumfang der Kfz-Elektronik die Länge und das Gewicht des Kabelbaums sowie die Anzahl der Anschlüsse an den Steuergeräten. Abhilfe schaffte bisher ein Datenbus, insbesondere ein CAN-Bus (Controller Area Network), der sämtliche Informationen über zwei Leitungen überträgt. Ein solcher Datenbus verbindet eine Vielzahl von Steuergeräten miteinander, die in einem Fahrzeug zusammenarbeiten. Dabei können die angeschlossenen Steuergeräte über den Datenbus gegenseitig Informationen austauschen. Zur Datenübertragung sind die einzelnen Steuergeräte in dem Bussystem miteinander vernetzt. Überträgt eine Station bzw. ein Steuergerät Informationen mittels eines Datenrahmens (Data frame) in das Bussystem hinein, können andere Stationen bzw. Steuergeräte diese Informationen überwachen bzw. "mithören". Stationen; für welche die Information in dem Datenrahmen relevant ist, werden diese nutzen, andere Stationen ignorieren diese Datenrahmen.

Mit der fortschreitender Zunahme an Steuergeräten, welche über die im Kraftfahrzeug vorhandenen Bussysteme kommunizieren sollen, insbesondere aus den Bereichen Telematik, Media- und Audio und Automatisierung des Fahrzeugs, ergibt sich die Problematik, dass immer mehr Datenvolumen und damit Datenrahmen über die bestehenden Bussysteme übertragen werden sollen. Aufgrund der seriellen Übertragungsweise ergibt sich dabei oftmals eine Überlastung bzw. ein "Stau" im Datenverkehr eines solchen Kommunikationsnetzwerks

Unabhängig hiervon besteht der Wunsch der Fahrzeughersteller, aus ökonomischen und ökologischen Gesichtspunkten heraus, insbesondere vor dem Hintergrund der zunehmenden Elektrifizierung des Antriebs der Kraftfahrzeuge, Gewicht der Kraftfahrzeuge einzusparen und bestehende Bussysteme zusammenzuführen oder gar die Stromleitungen, welche zur Stromversorgung der Stationen bzw. Steuergeräte dienen, als Bussystem zu nutzen, d.h. über diese Stromversorgung ein sogenanntes PowerLAN, auch dLAN (direct LAN) oder Powerline communication (PLC) genannt, insbesondere nach dem Standard IEEE 1901, zu nutzen.

Dieser Standard benutzt beispielsweise als Zugriffsverfahren ein Mehrfachzugriff-mit-Trägerprüfung-und-Kollisionsvermeidungsverfahren (CSMA/CA). Bei diesem kann es zu Kollisionen beim Versenden von Datenrahmen kommen. Kommen dagegen Zeitmulitplex-Verfahren (TDMA) zum Einsatz, besteht der Nachteil, dass diese aufgrund der festen Zuteilung der Zeitzugriffsschlitze an Stationen unflexibel sind, weil die Zuteilung der Zugriffsschlitze meist statisch oder zentral koordiniert erfolgt.

DE 4 129 205 A1 betrifft ein Verfahren zum Aufbau von Botschaften für den Datenaustausch und/oder für die Synchronisation von Prozessen in Datenverarbeitungsanlagen, wobei eine Botschaft wenigstens ein Element bzw. Start-Bitfeld(SOF), Identifizierung und Daten umfasst, wobei ein wenigstens ein Bit aufweisendes Bitfeld (IDE-Feld, IDE- Bit) zur Kennzeichnung der Länge des Identifizierers vorgesehen ist.

DE 69 807 235 T2 betrifft ein Verfahren zum Reduzieren der Zahl von Nachrichten, die für das Senden von Nachrichten in einer deterministischen Art und Weise zwischen mehreren Knoten erforderlich ist, die kommunikativ unter Verwendung des Controller Area Network (CAN)-Serienkommunikationsprotokolls durch einen Bus verbunden sind.

Die DE 197 21 740 A1 betrifft ein Steuerungsverfahren bei einem seriellen Bus mit mehreren Teilnehmern. Die einzelnen Teilnehmer kommunizieren über Daten-Telegramme, die jeweils mindestens die Adresse des angesprochenen Teilnehmers als Zieladresse und die Adresse des sendenden Teilnehmers als Quelladresse enthalten. Um einzelne Teilnehmer zu bestimmten Zeitpunkten auf den Bus zugreifen zu lassen, werden von einem als Master ausgebildeten ersten Teilnehmer in zyklischer Folge Trigger-Telegramme gesendet.

Die DE 100 00 305 A1 betrifft ein Verfahren und eine Vorrichtung zum Austausch von Daten und Nachrichten zwischen wenigstens zwei Teilnehmern, welche mittels eines Bus-Systems verbunden sind, wobei die Daten enthaltenden Nachrichten durch die Teilnehmer durch das Bus-System übertragen werden und jede Nachricht eine, die enthaltenen Daten charakterisierende Kennung enthält, wobei jeder Teilnehmer anhand der Kennung entscheidet, ob er die Nachricht empfängt.

Die US 611 888 betrifft eine Vorrichtung und ein Verfahren zum deterministischen Kommunizieren zwischen mehreren Knoten in einer Weise, welche mit dem Controller Area Network (CAN)-Kommunikationsprotokoll entspricht. Das System benutzt Standard-CAN-Fehlerprüfung, Busarbitrierung und Nachrichtenformatierung. Ein Knoten auf dem Bus wird als Masterknoten ausgewählt. Der Masterknoten gibt periodische Synchronisationssignale aus, welche die Zeitunterteilung (time divisions) definieren, während welchen der Betrieb von jedem Knoten und Kommunikation über den CAN-Bus organisiert werden.

Die DE 10 2012 204 536 A1 betrifft ein Netzwerk und ein Verfahren zur Übertragung von Daten über ein gemeinsames Übertragungsmedium mit mehreren Teilnehmern. Die Datenübertragung erfolgt in wenigstens einem Übertragungszyklus mit einstellbarer Zeitdauer, wobei jeder Übertragungszyklus wenigstens einen ersten Zeitbereich mit synchronem Medienzugriffsverfahren und wenigstens einem zweiten Zeitbereich mit asynchronem Medienzugriffsverfahren unterteilt ist. Im ersten Zeitbereich ist jedem im zweiten Zeitbereich sendenden berechtigten Teilnehmer ein Zeitschlitz zugeordnet, in welchem er bei Bedarf einen Medienzugriffswunsch für eine im zweiten Zeitbereich zu sendende Nachricht überträgt.

Die DE 10 2012 200 475 A1 betrifft einen Sende-/Empfangsknoten mit einer Schnittstelle zum Herstellen einer Verbindung mit einem Flex-RAY- oder Ling-Datenbus, wobei der Sende-/Empfangsknoten ausgebildet ist, um bei einer Abfolge von Zeitabschnitten das Auftreten einer ersten Bedingung und einer zweiten Bedingung zu erfassen, und, falls die erste und die zweite Bedingung für ein zugeordneten Zeitabschnitt erfüllt sind, um den Flex-RAY- oder Ling-Datenbus während des zugeordneten Zeitabschnitts einen Rahmen einer verfügbaren Nachricht über die Schnittstelle bereitzustellen.

In der WO 93/02512 A1 ist ein Verfahren zur seriellen Datenübertragung mittels Datenrahmen in einem Kommunikationsnetzwerk mit einer Mehrzahl von Stationen beschrieben, bei dem eine Prioritätsauflösung für durch die Mehrzahl von Stationen auf einem Kommunikationskanal zu übertragende Botschaften erfolgt.

Vor dem Hintergrund dieses Stands der Technik ist es eine Aufgabe der Erfindung, ein verbessertes, insbesondere flexibles, kollisionsfreies und deterministisches Zugriffsverfahren zur seriellen Datenübertragung anzugeben.

Diese Aufgabe wird durch ein Verfahren nach Anspruch 1 gelöst. Vorteilhafte Ausgestaltungen werden in den Unteransprüchen beansprucht.

Ein erster Aspekt der Erfindung betrifft ein Verfahren zur seriellen Datenübertragung mittels Datenrahmen (data frame) in einem Kommunikationsnetzwerk mit einer Mehrzahl von Stationen, insbesondere ein Zeitmultiplex-Verfahren, welches bei einer Kommunikation der Mehrzahl von Stationen vorzugsweise folgende Arbeitsschritte aufweist: Ausführen einer ersten Prioritätsauflösung für durch die Mehrzahl von Stationen auf einem Kommunikationskanal zu übertragenden Botschaften, welche einem ersten Präfix zugeordnet sind; Übertragen eines ersten Datenrahmens durch eine Station der Mehrzahl von Stationen, welche eine erste Botschaft des ersten Präfixes und der höchsten Priorität zu übertragen hat, während einer Dauer eines vordefinierten ersten Zugriffschlitzes; Ausführen einer zweiten Prioritätsauflösung von auf dem Kommunikationskanal durch die Mehrzahl von Stationen zu übertragenden Botschaften, welche einem zweiten Präfix zugeordnet sind; und Übertragen eines zweiten Datenrahmens durch eine Station der Mehrzahl von Stationen, welche eine zweite Botschaft des zweiten Präfixes und der höchsten Priorität der zweiten Prioritätsauflösung zu übertragen hat, während einer Dauer eines vordefinierten zweiten Zugriffschlitzes, wobei ein Zeitpunkt eines Beginns der ersten Prioritätsauflösung in dem Zeitpunkt eines Beginns der zweiten Prioritätsauflösung vorbestimmt sind.

Ein zweiter Aspekt der Erfindung betrifft ein Verfahren zur seriellen Datenübertragung mittels Datenrahmen in einem Kommunikationsnetzwerk mit einer Mehrzahl von Stationen, insbesondere ein Zeitmultiplex-Verfahren (TDMA) und weist vorzugsweise die folgenden Arbeitsschritte auf: Ausführen einer ersten Prioritätsauflösung für durch die Mehrzahl von Stationen auf einem Kommunikationskanal zu übertragenden Botschaften; Übertragen eines ersten Datenrahmens durch eine erste Station, welche eine erste Botschaft mit der höchsten Priorität zu übertragen hat, während einer Dauer eines vordefinierten ersten Zugriffsschlitzes; und Ausführen einer zweiten Prioritätsauflösung von auf dem Kommunikationskanal zu übertragenden Botschaften durch die Mehrzahl von Stationen, wobei der Zeitpunkt eines Beginns der ersten Prioritätsauflösung und eines Beginns der zweiten Prioritätsauflösung vorbestimmt ist.

Ein Datenrahmen (data frame) im Sinne der Erfindung ist eine Dateneinheit eines Protokolls. Ein Datenrahmen besteht vorzugsweise aus Ziel- und Quelladressen, Steuerinformationen zur Datenflusskontrolle, Nutzdaten eines Datenpakets und/oder einer Prüfsumme zur Gewährleistung der Datenintegrität.

Eine Prioritätsauflösung im Sinne der Erfindung umfasst das Untersuchen einzelner Botschaften in Bezug auf eine vordefinierte Priorität des mit dieser Botschaft zu übertragenden Datenrahmens und die Identifikation des Datenrahmens mit der höchsten Priorität bzw. vorzugsweise die Prioritätsabstufung zwischen einer Mehrzahl an Datenrahmen bzw. der Botschaften, welche jeweils einen Datenrahmen aufweisen.

Eine Station im Sinne der Erfindung ist ein Teilnehmer einer Kommunikation in einem Kommunikationsnetzwerk.

Ein Kommunikationskanal im Sinne der Erfindung ist ein Übertragungsmedium, welches gemeinsam von einer Mehrzahl an Stationen genutzt werden kann.

Die Erfindung basiert insbesondere auf dem Ansatz, bei einem Kommunikationsverfahren zeitlich vordefinierte Zugriffsschlitze, wie diese im Zeitmultiplex-Verfahren zum Einsatz kommen, und einer Prioritätsauflösung, wie diese bei Mehrfachzugriff mit Trägerprüfung und Kollisionsauflösungs-Verfahren (CSMA/CR) zum Einsatz kommen, die Zugriffsschlitze zusätzlich mit einem Präfix zu versehen, welches insbesondere ein Subsystem des Kommunikationsnetzwerks bezeichnet, und die Botschaften, welche von den einzelnen Stationen versendet werden sollen, jeweils wenigstens einer der möglichen Präfixe bzw. einem der Subsysteme zuzuordnen.

Das Präfix ist vorzugsweise eine Eigenschaft einer Botschaft, welche der die Botschaft versendenden Station bekannt ist. Alternativ oder zusätzlich kann das Präfix vorzugsweise durch die Art der jeweiligen Botschaft bestimmt sein, d.h. intrinsisch festgelegt sein oder auch mittels Metadaten angegeben werden, welche jedoch nicht Teil der Botschaft und/oder des zu übertragenden Datenrahmens sind. Alternativ werden Präfixe vorzugsweise von einem oder mehreren Bits gebildet, welche der Prioritätsauflösung einer Botschaft vorangestellt sind und insbesondere am Anfang des Prioritätsauflösungsraums (logisch) angeordnet sind. Hierbei können Botschaften mit einem definierten Präfix nur in Zeitschlitzen bzw. Subsystemen mit demselben Präfix übertragen werden.

Werden Zeitschlitze verschiedener Subsysteme zum Beispiel abwechselnd übertragen, und gibt es insgesamt zwei Präfixe bzw. Subsysteme, so kann eine Botschaft mit einem definierten Präfix beispielsweise nur in jedem zweiten Zeitschlitz übertragen werden.

Für Botschaften, welche dieselbe Präfix aufweisen und gleichzeitig von einer oder mehreren Stationen zur Übertragung anstehen, wird dann jeweils zusätzlich noch eine Prioritätsauflösung ausgeführt. Durch das Einführen der Präfixe bzw. Subsysteme bei der erfindungsgemäßen seriellen Datenübertragung wird die Dauer der Prioritätsauflösung verkürzt.

Wird beispielsweise ein Bit eines Prioritätsauflösungs-Raums einer Botschaft durch ein Präfix ersetzt, treten statistisch gesehen nur noch die Hälfte der Botschaften während der Kommunikation Prioritätsauflösungen an, verglichen mit einer Kommunikation ohne den Einsatz von Präfixen bzw. von Subsystemen.

Bei Präfixen mit mehr Bits verringert sich die Anzahl der eine Prioritätsauflösung antretenden Botschaften jeweils im Verhältnis 2ⁿ. Dadurch können Stationen ihren Transceiver in jenen Zeitabschnitten bzw. Zeitschlitzen abschalten, die zu Subsystemen gehören bzw. Präfixe aufweisen, für welche die Stationen keine Botschaften bzw. Frames zu übermitteln haben oder für die sie keine Botschaft bzw. Frames erwarten. Auf diese Weise kann erfindungsgemäß mit der Einführung von Subsystemen bzw. Präfixen der Energieverbrauch gesenkt und die Dauer der Prioritätsauflösung verkürzt werden.

Ist das Präfix kein Teil der zu versendenden Botschaft, so wird zusätzlich die Bitlänge der Botschaft reduziert, so dass auch die effektiv zu übertragende Datenmenge in dem Kommunikationsnetzwerk verringert werden kann.

Das erfindungsgemäße Zugriffsverfahren ermöglicht insbesondere einerseits einen kollisionsfreien und deterministischen Zugriff auf einen Kommunikationskanal, so dass ein erfolgreicher Empfang nicht durch eine Bestätigung (ACK) quittiert werden muss. Bei vergleichbarem Overhead zu einem CSMA-Verfahren ist der Verkehr auf dem Kommunikationskanal dadurch wesentlich verringert, da keine ACK-Botschaften übertragen werden müssen. Gleichzeitig kann aber das Bedürfnis einer Station, viele Datenrahmen in einer kurzen Zeit zu versenden, berücksichtigt werden, indem eine entsprechend hohe Priorität für die Übertragung dieses/dieser Datenrahmen gewählt wird. Durch die Prioritätsauflösung wird dabei sichergestellt, dass immer nur genau eine Station auf den Kommunikationskanal zugreift.

Ein weiterer Vorteil des erfindungsgemäßen Zugriffsverfahrens besteht darin, dass eine dynamische Zuweisung der anstehenden Übertragung, beispielsweise durch eine/einen Master-Station oder -Knoten, wegfällt und damit Kommunikation über den Kommunikationskanal und daher Übertragungskapazität eingespart wird. Auch kann eine Botschaft, sollte diese eine besondere Dringlichkeit aufweisen, flexibel mit einer neuen Präfix versehen werden, um eine möglichst baldige Übertragung zu gewährleisten. Hierfür ist keine Neukonfiguration des Kommunikationsnetzwerks, beispielsweise durch die/den Master-Station oder einen -Knoten, notwendig.

In einer vorteilhaften Ausgestaltung des erfindungsgemäßen Verfahrens weist dieses des Weiteren die folgenden Arbeitsschritte auf: Ausführen wenigstens einer weiteren Prioritätsauflösung durch die Mehrzahl von Stationen von auf den Kommunikationskanal zu übertragende Botschaften, welche einem dritten Präfix oder vierten Präfix zugeordnet sind; und Übertragen eines weiteren Datenrahmens durch eine Station der Mehrzahl von Stationen, welche eine weitere Botschaft des dritten Präfixes oder des vierten Präfixes und der höchsten Priorität der weiteren Prioritätsauflösung zu übertragen hat, während der Dauer eines vordefinierten weiteren Zugriffsschlitzes, wobei der Zeitpunkt eines Beginns der weiteren Prioritätsauflösung vorbestimmt ist.

Durch das Vorsehen weiterer Präfixe und Subsysteme kann die Anzahl an Botschaften, für welche eine Prioritätsauflösung ausgeführt wird, weiter reduziert werden. Auch kann die Zeitdauer, in welcher Stationen die aktiviert sind, die keine Botschaft mit entsprechenden Präfixen bzw. in den entsprechenden Subsystemen zu übertragen haben, verlängert werden.

In einer vorteilhaften Ausgestaltung eines erfindungsgemäßen Verfahrens weist dieses des Weiteren die Arbeitsschritte des Übertragens eines zweiten Datenrahmens durch eine zweite Station, welche eine zweite Botschaft mit der höchsten Priorität der zweiten Prioritätsauflösung zu übertragen hat, während einer Dauer eines vordefinierten zweiten Zugriffsschlitzes auf. Des Weiteren weist das Verfahren vorzugsweise den Arbeitsschritt des Ausführens wenigstens einer weiteren Prioritätsauflösung von auf den Kommunikationskanal zu übertragenden Botschaften durch die Mehrzahl von Stationen auf, wobei der Zeitpunkt des Beginns einer zweiten Prioritätsauflösung und des Beginns einer weiteren Prioritätsauflösung vorbestimmt ist.

Die Arbeitsschritte des Verfahrens können prinzipiell so lange ausgeführt werden, wie eine Kommunikation zwischen der Mehrzahl von Stationen anhält und/oder der Kommunikationskanal aktiviert ist.

In einer weiteren vorteilhaften Ausgestaltung eines erfindungsgemäßen Verfahrens sind die Zeitpunkte des Beginns der jeweiligen Prioritätsauflösung als absolute Zeitpunkte vorbestimmt.

Durch das Vorbestimmen des Zeitpunktes der jeweiligen Prioritätsauflösung weiß jede Station, wann mit einer Prioritätsauflösung zu beginnen ist, ohne dass hierfür eine Botschaft zur Koordinierung über den Kommunikationskanal gesendet werden muss.

In einer weiteren vorteilhaften Ausgestaltung eines erfindungsgemäßen Verfahrens ist die Zeitdauer zwischen dem Beginn einer vorherigen Prioritätsauflösung und einer nachfolgenden Prioritätsauflösung vorbestimmt und entspricht insbesondere der Länge des jeweiligen Zugriffsschlitzes.

Durch das Bestimmen der Zeitdauer zwischen den jeweiligen Prioritätsauflösungen, beispielsweise durch eine Information, welche in einem Zugriffsschlitz enthalten ist, lässt sich die Länge der Zugriffsschlitze je nach Bedarf verändern.

In einer weiteren vorteilhaften Ausgestaltung eines erfindungsgemäßen Verfahrens weisen alle Zugriffsschlitze die gleiche Länge auf.

Hierdurch kann gewährleistet werden, dass, selbst wenn Stationen der Kommunikation nicht folgen, d.h. die Kommunikation nicht mithören, identifizieren können, wann die nächste Prioritätsauflösung startet, auch wenn keine absoluten Zeitpunkte vorgegeben sind.

In einer weiteren vorteilhaften Ausgestaltung eines erfindungsgemäßen Verfahrens weisen Botschaften im Sinne der Erfindung, insbesondere die erste Botschaft, einen Prioritätsauflösungs-Raum und einen Datenrahmen auf, wobei der Datenrahmen vorzugsweise nach dem Prioritätsauflösungs-Raum angeordnet ist.

In einer weiteren vorteilhaften Ausgestaltung des erfindungsmäßen Verfahrens ist die Datenmenge des Datenrahmens so gewählt, dass die Übertragung der Botschaft kürzer als der erste Zugriffsschlitz ist.

In einer weiteren vorteilhaften Ausgestaltung eines erfindungsgemäßen Verfahrens weisen Zugriffsschlitze einen Zwischenrahmen-Raum (interframe space) auf, während welchem keine Station sendet, wobei der Zwischenrahmen-Raum nach dem Datenrahmen oder vor dem Prioritätauflösungs-Raum angeordnet ist und genügend Zeit verschafft, dass an der Kommunikation teilnehmende Stationen von Empfangen auf Senden umschalten können und ggf. interne Verarbeitungen in den Stationen vorgenommen werden können.

In einer weiteren vorteilhaften Ausgestaltung eines erfindungsgemäßen Verfahrens weist dieses des Weiteren den Arbeitsschritt des Eintretens der übrigen der Mehrzahl von Stationen in einem Wartezustand auf, in welchem diese vorzugsweise nicht senden.

Durch das Eintreten in den Wartezustand können die Stationen Energie sparen, was insbesondere dann vorteilhaft ist, wenn diese mit einem Akkubetrieb betrieben werden.

In einer weiteren vorteilhaften Ausgestaltung eines erfindungsgemäßen Verfahrens überwacht wenigstens eine Station der übrigen der Mehrzahl von Stationen in dem Wartezustand die Kommunikation auf dem Kommunikationskanal nicht.

Auch hierdurch kann bei Stationen, welche bei der Übertragung nicht zum Zug gekommen sind, welche an der Kommunikation jedoch nicht interessiert sind, Energie eingespart werden.

In einer weiteren vorteilhaften Ausgestaltung eines erfindungsgemäßen Verfahrens weist dieses des Weiteren den Arbeitsschritt des Beendens des Wartezustands der übrigen der Mehrzahl von Stationen vor Beginn der Prioritätsauflösung des nachfolgenden Zugriffschlitzes auf.

Hierdurch wird gewährleistet, dass, sofern Botschaften der Stationen, welche sich im Wartezustand befinden, zu übertragen sind, die jeweiligen Stationen an der nächsten Prioritätsauflösung teilnehmen.

In einer weiteren vorteilhaften Ausgestaltung eines erfindungsgemäßen Verfahrens weist der Prioritätsauflösungsraum Prioritätsauflösungsschlitze auf, insbesondere dominante oder rezessive Signale, vorzugsweise Bits, auf, und das Verfahren weist des Weiteren den Arbeitsschritt des Ermittelns der Anzahl an zu übertragenden Botschaften in dem Kommunikationsnetzwerk auf. Weiter vorzugsweise weist das Verfahren den Arbeitsschritt des Festlegens der Anzahl der Prioritätsauflösungsschlitze auf der Grundlage der maximalen Anzahl an zu übertragenden Botschaften auf.

Hierdurch kann gewährleistet werden, dass der Prioritätsauflösungs-Raum nur so groß wie unbedingt nötig ist und mithin nicht zu viel Zeit auf dem Kommunikationskanal belegt wird.

In einer weiteren vorteilhaften Ausgestaltung eines erfindungsgemäßen Verfahrens ist jeder Zugriffsschlitz in einer vorab festgelegten Reihenfolge einem Subsystem einer Mehrzahl von Subsystemen zugeordnet, wobei jedem Subsystem der Mehrzahl von Subsystemen wiederum wenigstens ein Präfix einer Mehrzahl von Präfixen zugeordnet ist und wobei nur jene Botschaften während einem Zeitschlitz übertragen werden dürfen, welche dem Präfix des Subsystems des Zeitschlitzes zugeordnet sind.

In einer weiteren vorteilhaften Ausgestaltung eines erfindungsgemäßen Verfahrens ist das jeweilige Präfix eine Eigenschaft einer Botschaft, welche ausschließlich der einen Station der Mehrzahl von Stationen, welche die Botschaft zu übertragen hat, bekannt ist.

In einer weiteren vorteilhaften Ausgestaltung eines erfindungsgemäßen Verfahrens ist das jeweilige Präfix eine intrinsische Eigenschaft der Botschaft.

In einer weiteren vorteilhaften Ausgestaltung weist eine Botschaft das jeweilige Präfix auf, insbesondere belegt das jeweilige Präfix wenigstens ein Bit der Botschaft und ist vorzugsweise vor dem Prioritätsauflösungs-Raum angeordnet.

In einer weiteren vorteilhaften Ausgestaltung eines erfindungsgemäßen Verfahrens existieren 2ⁿ Subsysteme und/oder Präfixe, wobei n eine natürliche Zahl ist.

In einer weiteren vorteilhaften Ausgestaltung eines erfindungsgemäßen Verfahrens wird die Anzahl der Subsysteme vor der Ausführung der ersten Prioritätsauflösung, insbesondere in Abhängigkeit von der Anzahl an Stationen, welche an der Kommunikation teilnehmen, festgelegt.

Weitere Merkmale, Vorteile und Anwendungsmöglichkeiten der Erfindung ergeben sich aus der nachfolgenden Beschreibung in Zusammenhang mit den Figuren. Es zeigen
Figur 1 eine teilweise schematische Darstellung eines Kommunikationsnetzwerks, in welchem das erfindungsgemäße Verfahren Anwendung findet;
Figur 2 eine teilweise schematische Darstellung einer ersten Ausführungsform eines Kommunikationsprotokolls des erfindungsgemäßen Verfahrens zur Datenübertragung;
Figur 3 eine teilweise schematische Darstellung einer zweiten Ausführungsform eines Kommunikationsprotokolls des erfindungsgemäßen Verfahrens zur Datenübertragung; und
Figur 4 ein teilweise schematisches Blockdiagramm einer Ausführungsform des erfindungsgemäßen Verfahrens zur Datenübertragung.

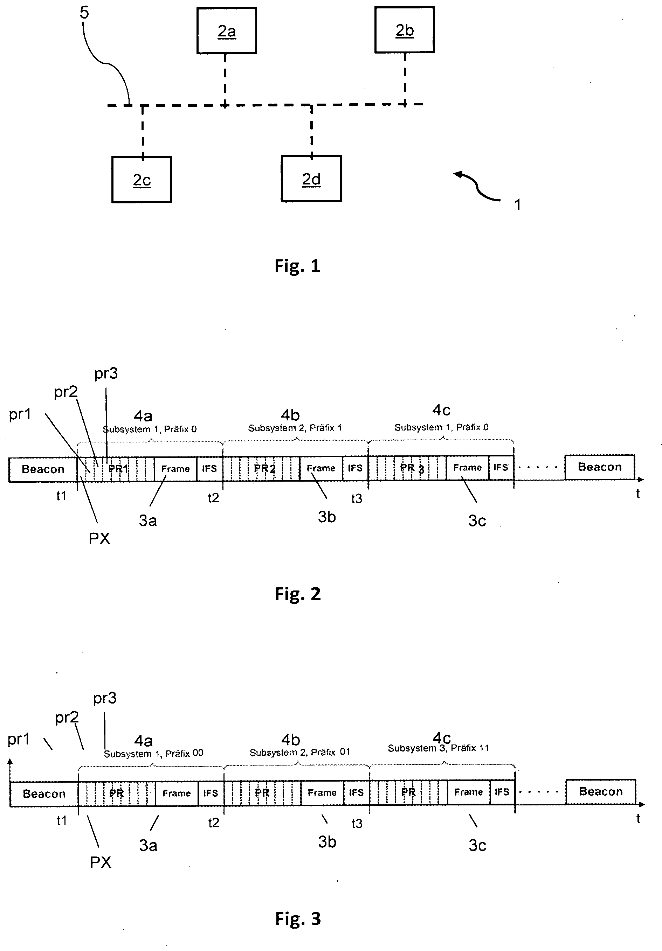

In Fig. 1 ist ein Beispiel für ein Kommunikationsnetzwerk gezeigt, in welchem das erfindungsgemäße Verfahren zur seriellen Datenübertragung vorzugsweise zum Einsatz kommt. Dieses Kommunikationsnetzwerk weist vorzugsweise eine erste Station 2a, eine zweite Station 2b und weitere Stationen 2c und 2d auf. Vorzugsweise handelt es sich bei dem Kommunikationsnetzwerk um ein Kommunikationsnetzwerk eines Fahrzeugs, insbesondere eines Kraftfahrzeugs, und die Stationen 2a, 2b, 2c, 2d sind Steuergeräte, welche verschiedene Funktionen für den Fahrbetrieb oder sonstige Funktionen des Fahrzeugs steuern. Die einzelnen Stationen 2a, 2b, 2c, 2d sind über einen Kommunikationskanal 5 zur Datenübertragung vorzugsweise verbunden. Bei dem Kommunikationsnetzwerk handelt es sich vorzugsweise um ein WLAN-Netzwerk, ein CAN-Netzwerk, ein Power-LAN-Netzwerk, ein Funknetzwerk oder ähnliches, so dass der Kommunikationskanal auf der physischen Ebene drahtgebunden, per Funk, optisch oder auch akustisch sein kann.

Fig. 2 stellt einen zeitlichen Ablauf einer ersten Ausführungsform eines Kommunikationsprotokolls des erfindungsgemäßen Verfahrens zur seriellen Datenübertragung dar. Eine Kommunikation wird hierbei vorzugsweise jeweils durch ein Beacon eingeleitet und abgeschlossen.

Zwischen diesen Beacons sind zeitlich nacheinander Zugriffsschlitze 4 angeordnet, in Fig. 2 ist dabei ein erster Zugriffsschlitz 4a, ein zweiter Zugriffsschlitz 4b und ein dritter Zugriffsschlitz 4c dargestellt. Zugriffsschlitze 4 enthalten dabei vorzugsweise jeweils einen Prioritätsauflösungs-Raum, welcher wiederum in Prioritätsauflösungsschlitze pr1, pr2, pr3... aufgeteilt ist, welche insbesondere durch wenigstens ein Bit gebildet werden. Der Prioritätsauflösungs-Raum dient zur Prioritätsauflösung zwischen Botschaften von verschiedenen Stationen 2a, 2b, 2c, 2d, deren Übertragung gleichzeitig auf dem Kommunikationskanal 5 begonnen werden soll.

Über dominante und rezessive Signale, welche jeweils einem Prioritätsauflösungsschlitz pr1, pr2, pr3, ... zugeordnet sind, erkennt vorzugsweise jede einzelne Station 2a, 2b, 2c, 2d, ob sie ihren jeweiligen Datenrahmen (frame) übertragen darf.

Stellt eine Station 2a, 2b, 2c, 2d in einem der Prioritätsschlitze pr1, pr2, pr3, ... fest, dass es die Botschaft einer anderen Station 2a, 2b, 2c, 2d mit höherer Priorität gibt, so bricht die erste Station 2a die Übertragung vorzugsweise ab und überwacht den Kommunikationskanal 5 weiter. Vorzugsweise kann diese auch in einen Ruhezustand fallen und erst vorzugsweise zur nächsten relevanten Prioritätsauflösung wieder erwachen.

Das erste Bit PX des Prioritätsauflösungs-Raums PR1, PR2, PR3 ist vorzugsweise einem Präfix 0,1; 00, 01, 10, 11 vorbehalten, welches ein Subsystem von Zeitschlitzen 4a, 4b, 4c,... bezeichnet, während welchem/welcher die entsprechende Botschaft übertragen werden kann. Alternativ zu einem Bit PX kann das Präfix 0,1; 00, 01, 10, 11 einer jeweiligen zu sendenden Botschaft auch lediglich der absendenden Station bekannt sein, eine intrinsische Eigenschaft der Botschaft sein oder dieser als Metadaten, welche nicht gesendet werden, zugordnet sein.

Das erfindungsgemäße Kommunikationsverfahren kann hierbei vorzugsweise 2ⁿ Subsysteme aufweisen, wobei n eine natürliche Zahl ist und die Anzahl der Bits PX des Präfixes 0,1; 00, 01, 10, 11 angibt. Ist ein Bit PX vorgesehen (n=1), so kann das Präfix vorzugsweise die Werte 0 und 1 annehmen. Sind zwei Bits vorgesehen (n=2), so kann das Präfix vorzugsweise die Werte 00, 01, 10 und 11 annehmen.

Die dem jeweiligen Subsystem zugeordneten Zeitschlitze 4a, 4b, 4c,... können hierbei in einer beliebigen Reihenfolge, zum Beispiel abwechselnd während des Kommunikationsverfahrens angeordnet sein. Vorzugsweise wird die Reihenfolge der Subsysteme vor einer Kommunikation festgelegt, weiter vorzugsweise in Abhängigkeit der Anzahl an einer Kommunikation teilnehmenden Stationen.

Nach dem Prioritätsauflösungs-Raum PR1, PR2, PR3,... ist in den Botschaften der Stationen 2a, 2b, 2c, 2d vorzugsweise wenigstens jeweils ein Datenrahmen (frame) 3a, 3b, 3c angeordnet. Dieser Datenrahmen (frame) 3a, 3b, 3c enthält ein Datenpaket, welches über den Kommunikationskanal 5 gesendet werden soll. Die kumulative Dauer des Prioritätsauflösungs-Raums und des Rahmens muss hierbei kürzer sein als ein Zeitschlitz 4a, 4b, 4c, wobei in einem Zeitschlitz vorzugsweise ein weiterer Zwischenrahmenraum (IFS) vorhanden ist, welcher vorzugsweise eine Prüfsumme enthält und/oder dazu dient, dass die Stationen 2a, 2b, 2c, 2d vom Empfangsbetrieb zur Überwachung des Kommunikationskanals 5 auf einen Sendebetrieb zum Ausführen einer neuerlichen Prioritätsauflösung, d.h. zum Übermitteln der dominanten oder rezessiven Signale überzugehen.

Die in Fig. 2 dargestellte Reihenfolge der Zeitschlitze 4a, 4b ist ein abwechselnder Modus, wobei auf einen ersten Zeitschlitz 4a, ein zweiter Zeitschlitz 4b und daraufhin wieder ein dritter Zeitschlitz 4a folgt, welcher wiederum dem ersten Subsystem, wie der erste Zeitschlitz 4a, zugeordnet ist. Es sind aber auch beliebige andere Reihenfolgen möglich.

Fig. 3 stellt einen zeitlichen Ablauf einer zweiten Ausführungsform eines Kommunikationsprotokolls des erfindungsgemäßen Verfahrens zur seriellen Datenübertragung dar. Auch hier wird eine Kommunikation vorzugsweise durch ein Beacon eingeleitet und abgeschlossen. Die in Fig. 3 dargestellte Ausführungsform unterscheidet sich von jener in Fig. 2 im Wesentlichen dadurch, dass nicht zwei sondern wenigstens drei Subsysteme mit Präfixen 00, 01 und 11 zum Einsatz kommen, welchen jeweils einem der Zeitschlitze 4a, 4b, 4c zugeordnet ist.

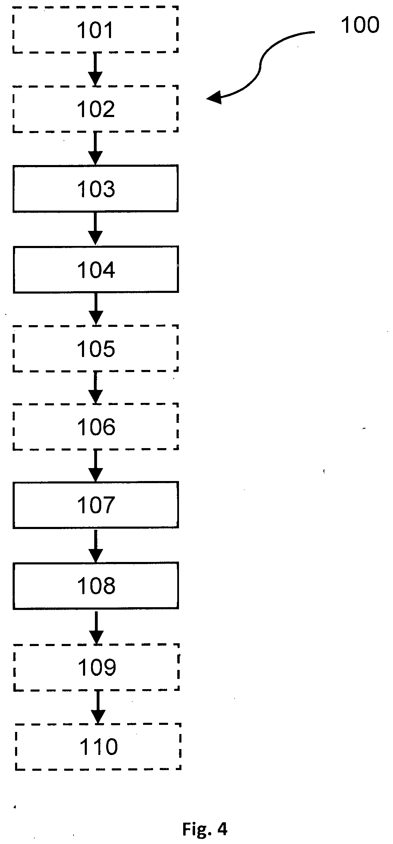

Fig. 4 zeigt ein teilweise schematisches Blockdiagramm eines erfindungsgemäßen Verfahrens 100 zur seriellen Datenübertragung. Vorzugsweise sind optionale Arbeitsschritte der vorteilhaften Ausgestaltungen gestrichelt dargestellt. Die Reihenfolge ist dabei vorzugsweise wie dargestellt, kann aber auch von dieser abweichen.

Der Zugriffsmechanismus des erfindungsgemäßen Verfahrens 100 implementiert eine Kollisionsauflösung basierend auf Prioritäten. Der Mechanismus ist dabei mit dem Zugriffsverfahren des CAN-Buses, einem CSMA-Verfahren, insbesondere CSMA-CR-Verfahren, vergleichbar. Ein Unterschied besteht jedoch darin, dass die Übertragungszeit, wie bei einem TDMA-Verfahren, zusätzlich in feste Zugriffsschlitze eingeteilt ist. Ein weiterer Unterschied besteht darin, dass Präfixe 0,1; 00, 01, 10, 11 vorgesehen sind, welche zur Reduzierung der an einer Prioritätsauflösung teilnehmenden Stationen dienen.

Die Stationen dürfen vorzugsweise eine Übertragung jeweils immer nur am Anfang eines Zugriffsschlitzes 4a, 4b, 4c beginnen, wobei die Anfangszeiten t1, t2, t3 ... der jeweiligen Zugriffsschlitze 4a, 4b, 4c vorzugsweise entweder fest als absolute Zeiten festgelegt sind oder jeweils in Bezug auf den vorherigen Anfang eines Zugriffschlitzes 4a, 4b, 4c definiert werden. Dies ist notwendig, da alle Stationen, die einen Datenrahmen übertragen wollen, gleichzeitig mit dem Ausführen 103 einer Prioritätsauflösung starten müssen.

Das Ausführen 103 einer Prioritätsauflösung wird vorzugsweise von der Übertragung 104 eines Datenrahmens durch eine der Stationen 2a, 2b, 2c, 2d, gefolgt. Durch die Prioritätsauflösung wird dabei sichergestellt, dass immer nur genau eine Station, z.B. die erste Station 2a auf den Kommunikationskanal 5 zugreift, um einen Datenrahmen, beispielsweise den ersten Datenrahmen 3a, zu senden. Um die Anzahl der Prioritätsauflösungsschlitze festzulegen 102, kann vorzugweise vorgesehen sein, die Anzahl an Stationen 2a, 2b, 2c, 2d in dem Kommunikationsnetzwerk 5 vorab zu ermitteln 101.

Während der Übertragung des Datenrahmens können jene Stationen, welche nicht an der Kommunikation beteiligt sind, vorzugsweise in einen Wartezustand treten 105. Dieser wird vorzugsweise vor dem Beginn der Prioritätsauflösung des nachfolgenden Zugriffsschlitzes 4a, 4b, 4c beendet 106. Stationen mit zu sendende Botschaften mit anderen Präfixen 0,1; 00, 01, 10, 11 wie des gerade anstehenden Präfixes 0,1; 00, 01, 10, 11 können vorzugweise schon vor der Prioritätsauflösung in einen Ruhezustand treten oder brauchen nicht aus diesem zu erwachen.

Nach einem Zwischenrahmen-Raum (interframespace, IFS) beginnt eine neuerliche zweite Prioritätsauflösung 107 zwischen den Stationen 2a, 2b, 2c, 2d, welche auf den Kommunikationskanal 5 zugreifen. Diese Schritte werden so lange wiederholt, wie eine Kommunikation zwischen den Stationen 2a, 2b, 2c, 2d auf den Kommunikationskanal 5 andauert.

Die Zeitpunkte des Beginns der ersten und der zweiten Prioritätsauflösung sowie weitere Prioritätsauflösungen t1, t2, t3 ... sind vorzugsweise vorbestimmt, so dass stets alle Stationen 2a, 2b, 2c, 2d zum gleichen Zeitpunkt mit einer Prioritätsauflösung beginnen.

Vorzugsweise weist das erfindungsgemäße Verfahren auch die Arbeitsschritte des Ermittelns 101 der einzelnen Stationen im Kommunikationsnetzwerk und des Festlegens 102 der Anzahl der Prioritätsauflösungsschlitze pr1, pr2, pr3, ... auf der Grundlage der maximalen Anzahl an zu übertragenden Nachrichten auf. Vorzugsweise im Wesentlichen gleichzeitig mit dem Übertragen 104 eines ersten Datenrahmens durch die erste Station 2a treten die Übrigen der Mehrzahl von Stationen 2b, 2c, 2d, ... in einen Wartezustand, in welchem diese nicht senden. Weiter vorzugsweise überwacht diese Mehrzahl von Stationen 2b, 2c, 2d, ... im Wartezustand die Kommunikation auf dem Kommunikationskanal nicht. Dieser Wartezustand wird vorzugsweise beendet 106, bevor eine neuerliche Prioritätsauflösung am Beginn des nachfolgenden Zugriffschlitzes ausgeführt wird.

**Bezugszeichenliste**

| | |
|---|---|
| Kommunikationsnetzwerk | 1 |
| Stationen | 2a, 2b, 2c, 2d |
| erster Datenrahmen | 3a |
| zweiter Datenrahmen | 3b |
| dritter Datenrahmen | 3c |
| erster Zugriffsschlitz | 4a |
| zweiter Zugriffsschlitz | 4b |
| dritter Zugriffsschlitz | 4c |
| Kommunikationskanal | 5 |
| Zeitpunkt einer ersten Prioritätsauflösung | t1 |
| Zeitpunkt einer zweiten Prioritätsauflösung | t2 |
| Zeitpunkt einer dritten Prioritätsauflösung | t3 |
| Prioritätsauflösungs-Raum | PR |
| Zwischenrahmen-Raum | IFS |
| Prioritätsauflösungsschlitz | pr1, pr2, pr3 |
| Präfix | 0,1; 00, 01, 10, 11 |
| Präfix-Bit | PX |

## Patentansprüche

1. Verfahren (100) zur seriellen Datenübertragung mittels Datenrahmen (data frame) in einem Kommunikationsnetzwerk (1) mit einer Mehrzahl von Stationen (2a, 2b, 2c, 2d, ...), insbesondere ein Zeitmultiplex-Verfahren (TDMA), welches bei einer Kommunikation der Mehrzahl von Stationen (2a, 2b, 2c, 2d, ...) folgende Arbeitsschritte aufweist:
Ausführen (103) einer ersten Prioritätsauflösung (PR1) für durch die Mehrzahl von Stationen auf einem Kommunikationskanal (5) zu übertragende Botschaften, welche einem ersten Präfix (0; 00) zugeordnet sind;
Übertragen (104) eines ersten Datenrahmens (3a) durch eine Station (2a) der Mehrzahl von Stationen, welche eine erste Botschaft des ersten Präfixes (0; 00) und der höchsten Priorität zu übertragen hat, während einer Dauer eines vordefinierten ersten Zugriffsschlitzes (4a);
Ausführen (107) einer zweiten Prioritätsauflösung (PR2) für durch die Mehrzahl von Stationen auf dem Kommunikationskanal (5) zu übertragende Botschaften, welche einem zweiten Präfix (1; 01) zugeordnet sind; und Übertragen (108) eines zweiten Datenrahmens (3b) durch eine Station (2b) der Mehrzahl von Stationen, welche eine zweite Botschaft des zweiten Präfixes (1; 01) und der höchsten Priorität der zweiten Prioritätsauflösung zu übertragen hat, während einer Dauer eines vordefinierten zweiten Zugriffsschlitzes (4b), wobei ein Zeitpunkt eines Beginns der ersten Prioritätsauflösung (t1) und ein Zeitpunkt eines Beginns der zweiten Prioritätsauflösung (t2) vorbestimmt sind.

2. Verfahren (100) nach Anspruch 1, des Weiteren die folgenden Arbeitsschritte aufweisend:
Ausführen (109) wenigstens einer weiteren Prioritätsauflösung (PR3) für durch die Mehrzahl von Stationen (2a, 2b, 2c, 2d, ...) auf dem Kommunikationskanal (5) zu übertragende Botschaften, welche einem dritten Präfix (10) oder vierten Präfix (11) zugeordnet sind; und
Übertragen (110) eines weiteren Datenrahmens (3c) durch eine Station (2c) der Mehrzahl von Stationen, welche eine weitere Botschaft des dritten Präfixes (10) oder des vierten Präfixes (11) und der höchsten Priorität der weiteren Prioritätsauflösung zu übertragen hat, während einer Dauer eines vordefinierten weiteren Zugriffsschlitzes (4c), wobei der Zeitpunkt eines Beginns der weiteren Prioritätsauflösung (t3) vorbestimmt ist.

3. Verfahren (100) nach Anspruch 1 oder 2, wobei die Zeitpunkte des Beginns der jeweiligen Prioritätsauflösung (t1, t2, t3 ...) als absolute Zeitpunkte vorbestimmt sind.

4. Verfahren (100) nach einem der Ansprüche 1 bis 3, wobei die Zeitdauer zwischen dem Beginn einer Prioritätsauflösung (t1) und einer nachfolgenden Prioritätsauflösung (t2) vorbestimmt ist und insbesondere der Länge des jeweiligen Zugriffsschlitzes (4) entspricht.

5. Verfahren (100) nach einem der Ansprüche 1 bis 4, wobei alle Zugriffsschlitze (4) die gleiche Länge aufweisen.

6. Verfahren (100) nach einem der Ansprüche 1 bis 5, wobei Botschaften jeweils einen Prioritätsauflösungs-Raum (PR) und einen Datenrahmen (FRAME) aufweisen, wobei der Datenrahmen (FRAME) nach dem Prioritätsauflösungs-Raum (PR) angeordnet ist.

7. Verfahren (100) nach einem der Ansprüche 1 bis 6, wobei die Datenmenge der Datenrahmen (FRAME) so gewählt ist, dass die Übertragungsdauer der Botschaften kürzer als die Zugriffsschlitze (4) ist.

8. Verfahren (100) nach einem der Ansprüche 1 bis 7, wobei Zugriffsschlitze (4) einen Zwischenrahmen-Raum (interframe space - IFS) aufweisen, während welchem keine Station (2a, 3b, 2c, 2d) sendet, wobei der Zwischenrahmenraum (IFS) nach dem Datenrahmen (FRAME) oder vor dem Prioritätsauflösungs-Raum (PR) angeordnet ist.

9. Verfahren (100) nach einem der Ansprüche 1 bis 8, wobei nach der ersten Prioritätsauflösung des Weiteren den folgenden Arbeitsschritt aufweisend:
Eintreten (105) der Übrigen der Mehrzahl von Stationen (2b, 2c, ...) in einen Wartezustand, in welchem diese nicht senden.

10. Verfahren (100) nach Anspruch 9, wobei wenigstens eine Station der Übrigen der Mehrzahl von Stationen (2b, 2c, ...) in dem Wartezustand die Kommunikation auf dem Kommunikationskanal nicht überwacht.

11. Verfahren nach Anspruch 9 oder 10, des Weiteren den folgenden Arbeitsschritt aufweisend:
Beenden (106) des Wartezustands der Übrigen der Mehrzahl von Stationen (2b, 2c, ...) vor Beginn der Prioritätsauflösung des nachfolgenden Zugriffsschlitzes.

12. Verfahren (100) nach einem der Ansprüche 6 bis 11, wobei der Prioritätsauflösungs-Raum (PR) Prioritätsauflösungsschlitze (pr1, pr2, pr3, ...) aufweist, insbesondere dominante oder rezessive Signale, vorzugsweise Bits, und wobei das Verfahren (100) des Weiteren die folgenden Arbeitsschritte aufweist:
Ermitteln (101) der Anzahl an Stationen (2a, 2b, 2c, 2d) in dem Kommunikationsnetzwerk (1); und
Festlegen (102) der Anzahl der Prioritätsauflösungsschlitze auf der Grundlage der maximalen Anzahl an zu übertragenden Nachrichten.

13. Verfahren (100) nach einem der Ansprüche 1 bis 12, wobei jeder Zugriffsschlitz in einer vorab festgelegten Reihenfolge einem Subsystem einer Mehrzahl von Subsystemen zugeordnet ist, wobei jedem Subsystem der Mehrzahl von Subsystemen wiederum wenigstens ein Präfix einer Mehrzahl von Präfixen (0, 1; 00, 01, 10, 11) zugeordnet ist und wobei nur jene Botschaften während einem Zeitschlitz (4, 4b, 4c,...) übertragen werden dürfen, welche dem Präfix (0, 1; 00, 01, 10, 11) des Subsystems des Zeitschlitzes (4, 4b, 4c, ...) zugeordnet sind.

14. Verfahren (100) nach einem der Ansprüche 1 bis 13, wobei das jeweilige Präfix (0, 1; 00, 01, 10, 11) eine Eigenschaft einer Botschaft ist, welche ausschließlich der einen Station (2a, 2b, 2c) der Mehrzahl von Stationen, welche die Botschaft zu übertragen hat, bekannt ist.

15. Verfahren (100) nach einem der Ansprüche 1 bis 13, wobei das jeweilige Präfix (0, 1; 00, 01, 10, 11) eine intrinsische Eigenschaft der Botschaft ist.

16. Verfahren (100) nach einem der Ansprüche 1 bis 13, wobei eine Botschaft das jeweilige Präfix (0, 1; 00, 01, 10, 11) aufweist, insbesondere wobei das jeweilige Präfix (0, 1; 00, 01, 10, 11) wenigstens ein Bit der Botschaft belegt und vorzugsweise vor dem Prioritätsauflösungs-Raum (PR) angeordnet ist.

17. Verfahren (100) nach einem der Ansprüche 1 bis 16, wobei 2ⁿ Subsysteme und/oder Präfixe existieren und n eine natürliche Zahl ist.

18. Verfahren (100) nach einem der Ansprüche 1 bis 17, wobei die Anzahl der Subsysteme vor der Ausführung der ersten Prioritätsauflösung (103), insbesondere in Abhängigkeit von der Anzahl an Stationen (2a, 2b, 2c, 2d, ...), festgelegt wird.

19. Computerprogramm, das Anweisungen aufweist, welche, wenn sie von einem Computer ausgeführt werden, diesen dazu veranlassen, die Schritte eines Verfahrens gemäß einem der Ansprüche 1 bis 18 ausführen.

20. Computer-lesbares Medium, auf welchem ein Computerprogramm nach Anspruch 19 gespeichert ist.

## Claims

1. A method (100) for serial data transmission by means of data frames in a communications network (1) having a plurality of stations (2a, 2b, 2c, 2d, ǔ), more especially a time-division multiplex method (TDMA), which method, during communication of the plurality of stations (2a, 2b, 2c, 2d, ǔ), comprises the following steps:
executing (103) a first priority resolution (PR1) for messages which are to be transmitted by the plurality of stations on a communications channel (5) and which are assigned a first prefix (0; 00);
transmitting (104) a first data frame (3a) by a station (2a) of the plurality of stations that is configured to transmit a first message having the first prefix (0; 00) and having the highest priority, during a predefined first access slot (4a);
executing (107) a second priority resolution (PR2) for messages which are to be transmitted by the plurality of stations on the communications channel (5) and which are assigned a second prefix (1; 01); and
transmitting (108) a second data frame (3b) by a station (2b) of the plurality of stations that is configured to transmit a second message having the second prefix (1; 01) and having the highest priority of the second priority resolution, during a predefined second access slot (4b), wherein a time of a start of the first priority resolution (t1) and a time of a start of the second priority resolution (t2) are predetermined.

2. A method (100) according to claim 1, further comprising the following steps:
executing (109) at least one further priority resolution (PR3) for messages which are to be transmitted by the plurality of stations (2a, 2b, 2c, 2d, ǔ) on the communications channel (5) and which are assigned a third prefix (10) or fourth prefix (11); and
transmitting (110) a further data frame (3c) by a station (2c) of the plurality of stations that is configured to transmit a further message having the third prefix (10) or having the fourth prefix (11) and having the highest priority of the further priority resolution, during a predefined further access slot (4c), wherein the time of a start of the further priority resolution (t3) is predetermined.

3. A method (100) according to claim 1 or 2, wherein the times of the start of the respective priority resolutions (t1, t2, t3, ǔ) are predetermined as absolute times.

4. A method (100) according to any one of claims 1 to 3, wherein the period of time between the start of one priority resolution (t1) and a following priority resolution (t2) is predetermined and more especially corresponds to the length of the particular access slot (4).

5. A method (100) according to any one of claims 1 to 4, wherein all access slots (4) have the same length.

6. A method (100) according to any one of claims 1 to 5, wherein messages each have a priority resolution space (PR) and a data frame (FRAME), wherein the data frame (FRAME) is arranged after the priority resolution space (PR).

7. A method (100) according to any one of claims 1 to 6, wherein the dataset of the data frames (FRAME) is selected such that the transmission duration of the messages is shorter than the access slot(4).

8. A method (100) according to any one of claims 1 to 7, wherein access slots (4) have an interframe space (IFS), during which no station (2a, 3b, 2c, 2d) transmits, wherein the interframe space (IFS) is arranged after the data frame (FRAME) or before the priority resolution space (PR).

9. A method (100) according to any one of claims 1 to 8, wherein after the first priority resolution the method further comprises the following step:
entering (105), by other of the plurality of stations (2b, 2c, ǔ), into a waiting state in which such other stations do not transmit.

10. A method (100) according to claim 9, wherein at least one station of the other of the plurality of stations (2b, 2c, ǔ) in the waiting state does not monitor the communication on the communications channel.

11. A method according to claim 9 or 10, further comprising the following step:
ending (106) the waiting state of the other of the plurality of stations (2b, 2c, ǔ) before the start of the priority resolution of the following access slot.

12. A method (100) according to any one of claims 6 to 11, wherein the priority resolution space (PR) has priority resolution slots (pr1, pr2, pr3, ǔ), more especially dominant or recessive signals, preferably bits, and wherein the method (100) further comprises the following steps:
determining (101) the number of stations (2a, 2b, 2c, 2d) in the communications network (1); and
defining (102) the number of priority resolution slots on the basis of the maximum number of communications to be transmitted.

13. A method (100) according to any one of claims 1 to 12, wherein each access slot is assigned to a subsystem of a plurality of subsystems in a previously defined sequence, wherein each subsystem of the plurality of subsystems is in turn assigned at least one prefix of a plurality of prefixes (0, 1; 00, 01, 10, 11), and wherein only those messages which are assigned to the prefix (0, 1; 00, 01, 10, 11) of the subsystem of a time slot (4, 4b, 4c, ǔ) can be transmitted during the time slot(4, 4b, 4c, ǔ).

14. A method (100) according to any one of claims 1 to 13, wherein the particular prefix (0, 1; 00, 01, 10, 11) is a property of a message that is known exclusively to a station (2a, 2b, 2c) of the plurality of stations that shall transmit the message in question.

15. A method (100) according to any one of claims 1 to 13, wherein the particular prefix (0, 1; 00, 01, 10, 11) is an intrinsic property of the message.

16. A method (100) according to any one of claims 1 to 13, wherein a message has the particular prefix (0, 1; 00, 01, 10, 11), more especially wherein the particular prefix (0, 1; 00, 01, 10, 11) occupies at least one bit of the message and is preferably arranged before the priority resolution space (PR).

17. A method (100) according to any one of claims 1 to 16, wherein 2ⁿ subsystems and/or prefixes exist and n is a natural number.

18. A method (100) according to any one of claims 1 to 17, wherein the number of subsystems is defined prior to the execution of the first priority resolution (103), more especially depending on the number of stations (2a, 2b, 2c, 2d, ǔ).

19. A computer program comprising instructions which, when run by a computer, prompt said computer to perform the steps of a method according to any one of claims 1 to 18.

20. A computer-readable medium, on which a computer program according to claim 19 is stored.

## Revendications

1. Procédé (100) permettant la transmission en série de données au moyen de trames de données (data frame) dans un réseau de communication (1) ayant un ensemble de postes (2a, 2b, 2c, 2d,...), en particulier procédé de multiplexage dans le temps (TDMA) qui, lors d'une communication de l'ensemble de postes (2a, 2b, 2c, 2d,...) comprend les étapes de travail suivantes consistant à :
effectuer (103) une première résolution de priorité (PR1) pour des messages devant être transmis par l'ensemble de postes, sur un canal de communication (5) et qui sont associés à un premier préfixe (0; 00),
transmettre (104) une première trame de données (3a) par un poste (2a) de l'ensemble de postes qui a à transmettre un premier message ayant le premier préfixe (0 ; 00) et la priorité la plus élevée pendant la durée d'une première fenêtre d'accès (4a) prédéfinie,
effectuer (107) une seconde résolution de priorité (PR2) pour des messages devant être transmis par l'ensemble de postes sur le canal de communication (5) et qui sont associés à un second préfixe (1 ; 01), et
transmettre (108) une seconde trame de données (3b) par un poste (2b) de l'ensemble de postes qui a à transmettre un second message ayant le second préfixe (1 ; 01) et la priorité la plus élevée de la seconde résolution de priorité pendant la durée d'une seconde fenêtre d'accès (4b) prédéfinie, le temps du début de la première résolution de priorité (t1) et le temps du début de la seconde résolution de priorité (t2) étant prédéfinies.

2. Procédé (100) conforme à la revendication 1,
comprenant en outre les étapes de travail suivantes consistant à :
effectuer (109) au moins une autre résolution de priorité (PR3) pour des messages devant être transmis par l'ensemble de postes (2a, 2b, 2c, 2d) sur le canal de communication (5) et qui sont associés à un troisième préfixe (10) ou à un quatrième préfixe (11), et
transmettre (110) une autre trame de données (3c) par un poste (2c) de l'ensemble de postes qui a à transmettre un autre message ayant le troisième préfixe (10) ou le quatrième préfixe (11) et a la priorité la plus élevée de la résolution de priorité, pendant une durée d'une autre fenêtre d'accès (4c) prédéfinie, le temps du début de l'autre résolution de priorité (t3) étant prédéfini.

3. Procédé (100) conforme à la revendication 1 ou 2, selon lequel les temps du début des résolutions de priorité respectives (t1, t2, t3...) sont prédéfinis sous la forme de temps absolus.

4. Procédé (100) conforme à l'une des revendications 1 à 3, selon lequel la durée entre le début d'une résolution de priorité (t1) et la résolution de priorité (t2) suivante est prédéfinie, et en particulier correspond à la longueur de chaque fenêtre d'accès (4).

5. Procédé (100) conforme à l'une des revendications 1 à 4, selon lequel toutes les fenêtres d'accès (4) ont la même longueur.

6. Procédé (100) conforme à l'une des revendications 1 à 5, selon lequel les messages comportent chacun un espace de résolution de priorité (PR) et une trame de données (FRAME), la trame de données (FRAME) étant située après l'espace de résolution de priorité (PR).

7. Procédé (100) conforme à l'une des revendications 1 à 6, selon lequel la quantité de données des trames de données (FRAME) est choisie de sorte que la durée de transmission des messages soit inférieure à la fenêtre d'accès (4).

8. Procédé (100) conforme à l'une des revendications 1 à 7, selon lequel des fenêtres d'accès (4) comportent un espace de trame intermédiaire (interframe space - IFS), pendant lequel aucun poste (2a, 3b, 2c, 2d) n'émet, l'espace de trame intermédiaire (IFS) étant situé après la trame de données (FRAME) ou avant l'espace de résolution de priorité (PR).

9. Procédé (100) conforme à l'une des revendications 1 à 8, selon lequel après la première résolution de priorité, on effectue l'étape de travail suivante consistant à :
faire entrer (105) les autres postes de l'ensemble de postes (2b, 2c,...) dans un état d'attente dans lequel ils n'émettent pas.

10. Procédé (100) conforme à la revendication 9, selon lequel au moins un poste parmi les autres postes de l'ensemble de postes (2b, 2c,...) ne surveille pas à l'état d'attente, la communication sur le canal de communication.

11. Procédé conforme à la revendication 9 ou 10, comprenant en outre l'étape de travail suivante consistant à :
terminer (106) l'état d'attente des autres postes de l'ensemble de postes (2b, 2c,...) avant le début de la résolution de priorité de la fenêtre d'accès suivante.

12. Procédé (100) conforme à l'une des revendications 6 à 11, selon lequel l'espace de résolution de priorité (PR) comporte des fenêtres de résolution de priorité (pr1, pr2, pr3,...), notamment des signaux dominants ou récessifs de préférence des bits, et le procédé (100) comporte en outre les étapes suivantes consistant à :
détecter (101) le nombre de postes (2a, 2b, 2c, 2d) dans le réseau de communication (1), et
déterminer (102) le nombre de fenêtres de résolution de priorité sur le fondement du nombre maximum d'informations à transmettre.

13. Procédé (100) conforme à l'une des revendications 1 à 12, selon lequel chaque fenêtre d'accès est associée dans un ordre préalablement déterminé à un sous-système d'un ensemble de sous-systèmes, à chaque sous-système de l'ensemble de sous-systèmes est également associé au moins un préfixe d'un ensemble de préfixes (0, 1 ; 00, 01, 10, 11), et, seuls doivent être transmis pendant une fenêtre de temps (4, 4b, 4c,...) les messages qui sont associés au préfixe (0, 1 ; 00, 01, 10, 11) du sous-système de la fenêtres de temps (4, 4b, 4c,...).

14. Procédé (100) conforme à l'une des revendications 1 à 13, selon lequel chaque préfixe (0, 1 ; 00, 01, 10, 11) est un attribut d'un message qui n'est connu que d'un poste (2a, 2b, 2c) de l'ensemble de postes qui a à transmettre le message.

15. Procédé (100) conforme à l'une des revendications 1 à 13, selon lequel chaque préfixe (0, 1 ; 00, 01, 10, 11) est un attribut intrinsèque du message.

16. Procédé (100) conforme à l'une des revendications 1 à 13, selon lequel un message comporte le préfixe (0, 1 ; 00, 01, 10, 11) respectif, en particulier le préfixe respectif (0, 1 ; 00, 01, 10, 11) occupe au moins un bit du message et est de préférence situé avant l'espace de résolution de priorité (PR).

17. Procédé (100) conforme à l'une des revendications 1 à 16, selon lequel il y a 2ⁿ sous-systèmes et/ou préfixes, n étant un nombre naturel.

18. Procédé (100) conforme à l'une des revendications 1 à 17, selon lequel le nombre de sous-systèmes est déterminé avant la mise en oeuvre de la première résolution de priorité (103), en particulier en fonction du nombre de postes (2a, 2b, 2c, 2d,...).

19. Programme d'ordinateur qui comporte des instructions qui, lorsqu'elles sont exécutées par un ordinateur permettent la mise en oeuvre des étapes du procédé conforme à l'une des revendications 1 à 18.

20. Support lisible par ordinateur sur lequel est enregistré un programme d'ordinateur conforme à la revendication 19.
